# EUROPEAN PATENT SPECIFICATION

(11) **EP 2 667 105 B1**
(45) Date of publication and mention of the grant of the patent: **17.07.2019**
(21) Application number: 12736519.5
(22) Date of filing: 16.01.2012
(51) Int. Cl.: F24F 1/00, F25B 5/02, F25B 41/00, F24D 15/04, F24F 5/00

(54) **AIR CONDITIONER**
KLIMAANLAGE
CLIMATISEUR

(30) Priority: 18.01.2011 JP 2011007731
(43) Date of publication of application: 27.11.2013
(73) Proprietor: Daikin Industries, Ltd., Osaka-shi, Osaka 530-8323 (JP)
(72) Inventor: KIZAWA, Toshihiro, Osaka-Shi Osaka 530-8323 (JP); HAMA, Takeo, Osaka-Shi Osaka 530-8323 (JP)
(74) Representative: Hoffmann Eitle
(86) International application number: PCT/JP2012/050725
(87) International publication number: WO 2012/099062

(56) References cited:
- WO-A1-2010/106771
- WO-A1-2010/106771
- JP-A- 7 055 234
- JP-A- S59 176 528
- JP-A- 2000 039 181
- JP-A- 2008 215 717
- JP-A- 2010 216 766
- JP-B- 2 002 064
- KR-A- 20020 087 801
- US-A1- 2005 050 911

## Description

### Technical Field

The present invention relates to an air conditioner including a refrigerant circuit having a radiation heat exchanger.

### Background Art

As an air conditioner, there has been known one including a refrigerant circuit having a compressor, an indoor heat exchanger, a radiation panel, a decompression structure, and an outdoor heat exchanger (e.g., see PTL 1). The indoor heat exchanger is provided inside the indoor unit, and the radiation panel is provided on the surface of the indoor unit. Another example can be seen in in PTL 2.

### Citation List

### Patent Literature

[PTL 1] Japanese Unexamined Patent Publication No. 280762/1993 (Tokukaihei 5-280762)
[PTL 2] WO 2010/106771 A1 discloses an air conditioner according to the preamble of claim 1.

### Summary of Invention

### Technical Problem

It is possible to structure the above-mentioned air conditioner so as to enable a radiation heating operation mode which causes a high-temperature refrigerant to flow in the radiation panel and the indoor heat exchanger to perform radiation heating and warm-air heating, and a warm-air heating operation mode which causes the high-temperature refrigerant not to flow in the radiation heat exchanger, but in the indoor heat exchanger to perform warm-air heating. During the warm-air heating operation mode, because the temperature of the radiation panel is substantially the same as the room temperature, the high-temperature refrigerant supplied to the radiation panel is condensed and accumulated in the pipe fitting of the radiation panel as the liquid refrigerant. During this warm-air heating operation mode, the liquid refrigerant accumulated in the pipe fitting of the radiation panel may leak out from the pipe fitting on the upstream side. In this case, the high-temperature refrigerant flows into the pipe fitting of the radiation panel, by a volume of liquid refrigerant having leaked out. Although the high-temperature refrigerant having flown in is condensed and accumulated in the pipe fitting of the radiation panel as the liquid refrigerant, the leakage of the liquid refrigerant from the pipe fitting of the radiation panel to the pipe fitting on the upstream side is repeated. This leads to a problem that the temperature of the radiation panel is not lowered.

In view of the above problem, an object of the present invention is to provide an air conditioner that solves the problem that the surface temperature of the radiation heat exchanger is not lowered.

### Solution to the Problems

A first aspect of the present invention is an air conditioner comprising a refrigerant circuit having a compressor, an indoor heat exchanger, a radiation heat exchanger, a decompression structure, and an outdoor heat exchanger. The indoor heat exchanger is provided in the indoor unit so as to face a fan. The radiation heat exchanger provided to a surface of the indoor unit. The refrigerant circuit is configured to enable a radiation heating operation mode in which radiation heating and warm-air heating are performed by causing a high-temperature refrigerant to flow in the radiation heat exchanger and the indoor heat exchanger, and a warm-air heating operation mode in which warm-air heating is performed by causing the high-temperature refrigerant to flow not in the radiation heat exchanger, but in the indoor heat exchanger. There is provided an outflow preventing means which, during the warm-air heating operation mode, prevents outflow of a liquid refrigerant in the radiation heat exchanger.

In this air conditioner, the high-temperature refrigerant is condensed and accumulated in the radiation heat exchanger as the liquid refrigerant during the warm-air heating operation mode; however, the outflow preventing means prevents outflow of this liquid refrigerant within the radiation heat exchanger. This prevents the high-temperature refrigerant from flowing into the radiation heat exchanger, thus solving the problem that the surface temperature of the radiation heat exchanger does not drop.

The air conditioner of the first aspect is also adapted so that the outflow preventing means is structured by arranging, above an entrance section of the radiation heat exchanger, a part of a pipe fitting in the vicinity of an entrance of the radiation heat exchanger.

In this air conditioner, outflow of the liquid refrigerant within the radiation heat exchanger is prevented with a simple structure, without a need of using another member.

According to the invention, the outflow preventing means is structured by a pipe fitting which is bent to form a convex upward from the entrance section of the radiation heat exchanger. The lower end position of the pipe fitting constituting an apex of the convexly-bent outflow preventing means is located above the upper end position of the pipe fitting constituting the entrance section.

In this air conditioner, the pipe fitting is bent to form a convex upward from the entrance section of the radiation heat exchanger. This way the pipe fitting in the vicinity of the entrance of the radiation heat exchanger is partially arranged above the entrance section of the radiation heat exchanger.

A second aspect representing an embodiment of the present invention is the air conditioner of the first aspect adapted so that the radiation heat exchanger includes: a radiation plate provided to a surface of the indoor unit; and a radiation pipe fitting fixed to the radiation plate; and the entrance section of the radiation heat exchanger is located in an uppermost part of the radiation pipe fitting.

In this air conditioner, the pipe fitting structuring the outflow preventing means is located above the uppermost part of the radiation pipe fitting. Therefore, outflow of the liquid refrigerant is reliably prevented.

A third aspect representing another embodiment of the present invention is the air conditioner of any of the first or second aspects adapted so that the refrigerant circuit includes: a principal channel sequentially having a decompression structure, an outdoor heat exchanger, and a compressor; a first channel provided with the indoor heat exchanger, which connects a branching section provided to the downstream side of the compressor in the principal channel with a merging section provided to the upstream side of the decompression structure during the heating operation; and a second channel provided with the radiation heat exchanger, which connects the branching section with the merging section in parallel with the first channel.

In this air conditioner, the problem that the surface temperature of the radiation heat exchanger does not drop is solved when the indoor heat exchanger and the radiation heat exchanger are provided in parallel with each other.

### Advantageous Effects

As hereinabove described, the present invention brings about the following effects.

In the first aspect, the high-temperature refrigerant is condensed and accumulated in the radiation heat exchanger as the liquid refrigerant during the second operation mode; however, the outflow preventing means prevents outflow of this liquid refrigerant within the radiation heat exchanger. This prevents the high-temperature refrigerant from flowing into the radiation heat exchanger, thus solving the problem that of the surface temperature of the radiation heat exchanger does not drop.

In addition, outflow of the liquid refrigerant within the radiation heat exchanger is prevented with a simple structure, without a need of using another member.

In the first aspect, the pipe fitting is bent to form a convex upward from the entrance section of the radiation heat exchanger. This way the pipe fitting in the vicinity of the entrance of the radiation heat exchanger is partially arranged above the entrance section of the radiation heat exchanger.

In the second aspect, the pipe fitting structuring the outflow preventing means is located above the uppermost part of the radiation pipe fitting. Therefore, outflow of the liquid refrigerant is reliably prevented.

With the third aspect, the problem that the surface temperature of the radiation heat exchanger does not drop is solved when the indoor heat exchanger and the radiation heat exchanger are provided in parallel with each other.

### Brief Description of Drawings

FIG. 1 is a circuit diagram illustrating a schematic configuration of an air conditioner according to an embodiment of the present invention, and is a view illustrating a flow of a refrigerant during an operation in a cooling operation mode and an operation in a warm-air heating operation mode.
FIG. 2 is a circuit diagram illustrating the schematic configuration of the air conditioner according to the embodiment of the present invention, and is a view illustrating the flow of the refrigerant during an operation in a radiation heating operation mode.
FIG. 3 is a perspective view of an indoor unit illustrated in FIGs. 1 and 2.
FIG. 4 is a sectional view taken on a line IV-IV of the indoor unit illustrated in FIG. 3.
FIG. 5 is a front elevation illustrating a state in which a front grill and an opening-closing panel of the indoor unit illustrated in FIG. 3 are detached.
FIG. 6(a) is a front elevation of a pipe fitting disposed on a right side of an indoor heat exchanger illustrated in FIG. 5; and FIG. 6(b) is a right side view of the pipe fitting in FIG. 6(a).
FIG. 7 is a view schematically illustrating a branching pipe illustrated in FIG. 6.
FIG. 8(a) is a front elevation of a radiation panel illustrated in FIG. 3; FIG. 8(b) is a plan view seen from the top of the radiation panel illustrated in FIG. 8(a) ; and FIG. 8(c) is a rear elevation of the radiation panel illustrated in FIG. 8(a).
FIG. 9(a) is a rear elevation of the radiation panel illustrated in FIG. 8; and FIG. 9(b) is a sectional view taken on a line b-b of the radiation panel illustrated in FIG. 9(a).
FIG. 10 is an enlarger view of a trap section illustrated in FIG. 9(a).
FIG. 11 is a sectional view taken on a line XI-XI of the radiation panel illustrated in FIG. 8(a).
FIG. 12 is a view illustrating a fixation structure of the pipe fitting near a connection section illustrated in FIG. 8.
FIG. 13 is a circuit diagram illustrating a schematic configuration of an air conditioner according to a first modification of the embodiment.
FIG. 14 is a circuit diagram illustrating a branching pipe of an air conditioner according to a second modification of the embodiment.

### Description of Embodiments

Hereinafter, an air conditioner 1 according to an embodiment of the present invention will be described.

### <Entire Configuration of Air Conditioner 1>

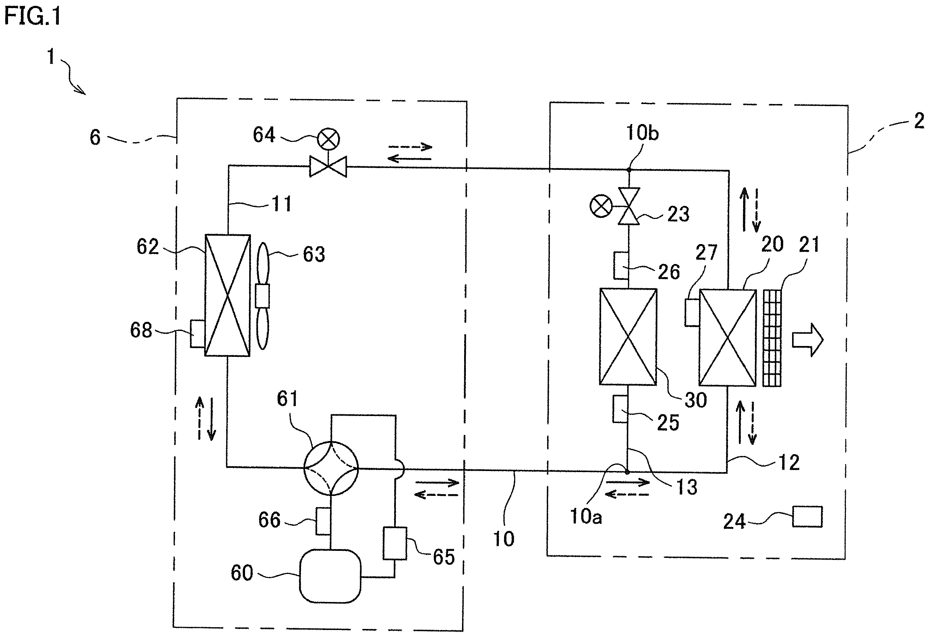

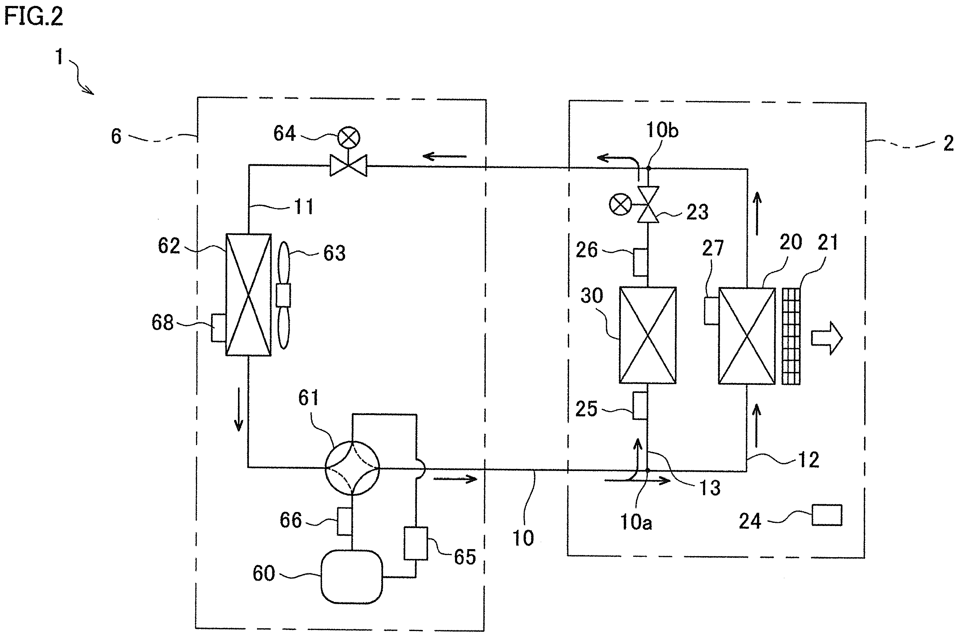

As illustrated in FIGs. 1 and 2, the air conditioner 1 of the embodiment includes an indoor unit 2 that is installed in a room and an outdoor unit 6 that is installed out of the room. The indoor unit 2 includes an indoor heat exchanger 20, an indoor fan 21 that is disposed near the indoor heat exchanger 20, a radiation panel 30, an indoor motor-operated valve 23, and an indoor temperature sensor 24 that detects an indoor temperature. The outdoor unit 6 includes a compressor 60, a four-way valve 61, an outdoor heat exchanger 62, an outdoor fan 63 that is disposed near the outdoor heat exchanger 62, and an outdoor motor-operated valve 64 (a decompression structure).

The air conditioner 1 includes a refrigerant circuit 10 that connects the indoor unit 2 and the outdoor unit 6 to each other. The refrigerant circuit 10 includes a principal channel 11 in which the outdoor motor-operated valve 64, the outdoor heat exchanger 62, and the compressor 60 are sequentially provided. An intake-side pipe fitting and a discharge-side pipe fitting of the compressor 60 are connected to the four-way valve 61. A branching section 10a is provided in a portion that becomes a downstream side of the compressor 60 in the principal channel 11 during a heating operation (as described later, when a refrigerant is flowing in a direction indicated by a solid-line arrow in FIGs. 1 and 2 in the refrigerant circuit 10), and a merging section 10b is provided in a portion that becomes an upstream side of the outdoor motor-operated valve 64. The refrigerant circuit 10 also includes a first channel 12 and a second channel 13. The first channel 12 connects the branching section 10a and the merging section 10b to each other, and the indoor heat exchanger 20 is provided in the first channel 12. The second channel 13 is connected in parallel with the first channel 12 between the branching section 10a and merging section 10b, and the radiation panel 30 is provided in the second channel 13.

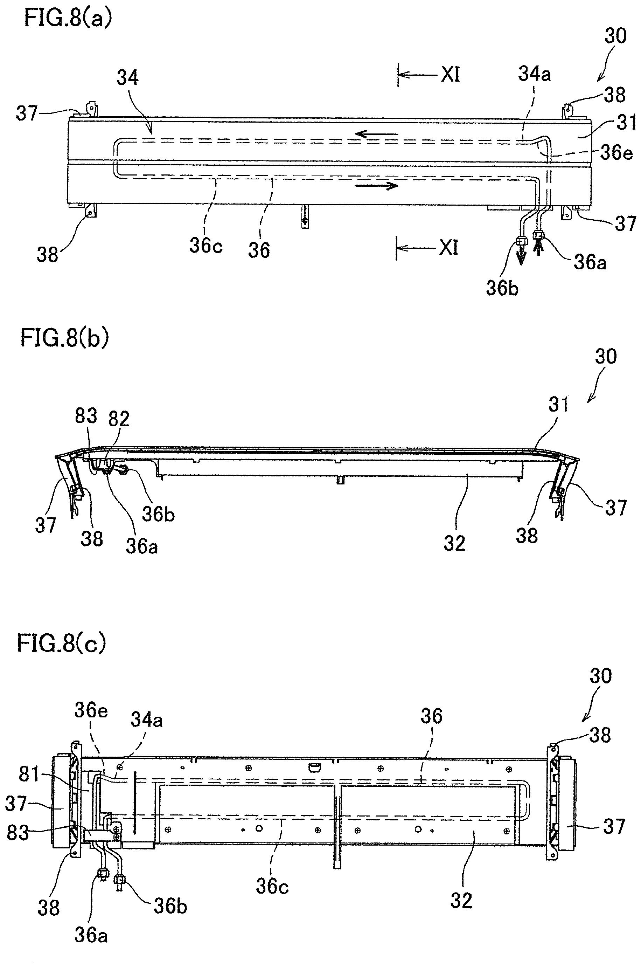

An indoor motor-operated valve 23 is provided between the radiation panel 30 and the merging section 10b in the second channel 13. A panel incoming temperature sensor 25 and a panel outgoing temperature sensor 26 are attached to both sides of the radiation panel 30 in the second channel 13. More specifically, the panel incoming temperature sensor 25 is provided in a pipe fitting and is on the upstream side of a radiation heat exchanger 34, which will be described later, (see FIG. 8(a) and the like) of the radiation panel 30 during the heating operation. The panel outgoing temperature sensor 26 is provided in the pipe fitting and is on the downstream side of the radiation heat exchanger 34 of the radiation panel 30 during the heating operation.

In the refrigerant circuit 10, an accumulator 65 is interposed between an intake side of the compressor 60 and the four-way valve 61, and a discharge temperature sensor 66 is attached between a discharge side of the compressor 60 and the four-way valve 61. An outdoor heat exchanger temperature sensor 68 is attached to the outdoor heat exchanger 62.

The indoor heat exchanger 20 includes the pipe fitting, which constitutes a part of the refrigerant circuit 10, and an indoor heat exchanger temperature sensor 27 is attached to the indoor heat exchanger 20. The indoor heat exchanger 20 is disposed on a windward side of the indoor fan 21. Air heated or cooled by heat exchange with the indoor heat exchanger 20 is blown as warm wind or cool wind into the room by the indoor fan 21, thereby performing warm-air heating or cooling.

As described in detail later, the radiation panel 30 is disposed on a surface side of the indoor unit 2, and includes a panel pipe fitting 36 (see FIG. 8 and the like), which constitutes a part of the refrigerant circuit 10. Heat of the refrigerant flowing in the pipe fitting is radiated into the room to perform radiation heating. The indoor motor-operated valve 23 is provided in order to adjust a flow rate of the refrigerant supplied to the radiation panel 30.

The air conditioner 1 of the embodiment can operate in three kinds of operation modes, namely, the cooling operation mode, the radiation heating operation mode, and the warm-air heating operation mode. The cooling operation mode is an operation mode in which the cooling is performed by causing the refrigerant to flow not in the radiation panel 30 but in the indoor heat exchanger 20. The radiation heating operation mode is an operation mode in which the radiation heating is performed by causing the refrigerant to flow in the radiation panel 30 while the warm-air heating is performed by causing the refrigerant to flow in the indoor heat exchanger 20. The warm-air heating operation mode is an operation mode in which the warm-air heating is performed by causing the refrigerant to flow not in the radiation panel 30 but in the indoor heat exchanger 20.

A flow of the refrigerant in the refrigerant circuit 10 during each operation will be described with reference to FIGs. 1 and 2.

During the cooling operation mode, the indoor motor-operated valve 23 is closed, and the four-way valve 61 is switched to a state indicated by a broken line in FIG. 1. Therefore, as indicated by a broken-line arrow in FIG. 1, the high-temperature, high-pressure refrigerant discharged from the compressor 60 flows in the outdoor heat exchanger 62 through the four-way valve 61. The refrigerant condensed by the outdoor heat exchanger 62 flows in the indoor heat exchanger 20 after being decompressed by the outdoor motor-operated valve 64. The refrigerant vaporized by the indoor heat exchanger 20 flows in the compressor 60 through the four-way valve 61 and accumulator 65.

During the radiation heating operation mode, the indoor motor-operated valve 23 is opened, and the four-way valve 61 is switched to a state indicated by a solid line in FIG. 2. Therefore, as indicated by a solid-line arrow in FIG. 2, the high-temperature refrigerant discharged from the compressor 60 flows in the indoor heat exchanger 20 and radiation panel 30 through the four-way valve 61. The refrigerant condensed by the indoor heat exchanger 20 and radiation panel 30 flows in the outdoor heat exchanger 62 after being decompressed by the outdoor motor-operated valve 64. The refrigerant vaporized by the outdoor heat exchanger 62 flows in the compressor 60 through the four-way valve 61 and accumulator 65.

During the warm-air heating operation mode, the indoor motor-operated valve 23 is closed, and the four-way valve 61 is switched to the state indicated by the solid line in FIG. 1. Therefore, as indicated by the solid-line arrow in FIG. 1, the high-temperature refrigerant discharged from the compressor 60 flows in the indoor heat exchanger 20 through the four-way valve 61. The refrigerant condensed by the indoor heat exchanger 20 flows in the outdoor heat exchanger 62 after being decompressed by the outdoor motor-operated valve 64. The refrigerant vaporized by the outdoor heat exchanger 62 flows in the compressor 60 through the four-way valve 61 and accumulator 65. With the indoor motor-operated valve 23 being closed, the refrigerant discharged from the compressor 60 does not flow onto the side of the merging section 10b beyond the indoor motor-operated valve 23 in the second channel 13. That is, in the second channel 13, the refrigerant is accumulated on the upstream side of the indoor motor-operated valve 23. The refrigerant accumulated in the second channel 13 is condensed to become the liquid refrigerant having the substantially same temperature as the indoor temperature.

### <Configuration of Indoor Unit 2>

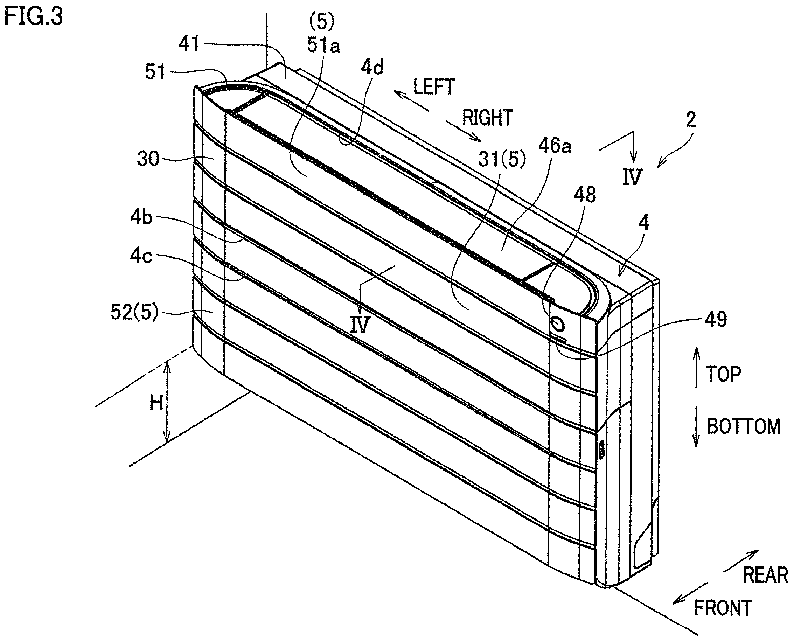

A configuration of the indoor unit 2 will be described below. As illustrated in FIG. 3, the indoor unit 2 of the embodiment has a rectangular solid shape as a whole, and is installed in the vicinity of a floor surface in the room. In the embodiment, the indoor unit 2 is attached to a wall surface while floating from the floor surface by about 10 cm. Hereinafter, a direction in which the indoor unit 2 projects from the attached wall is referred to as a "front", and the opposite direction is referred to as a "rear". A right-left direction in FIG. 3 is simply referred to as a "horizontal direction", and an up-down direction is simply referred to as a "vertical direction".

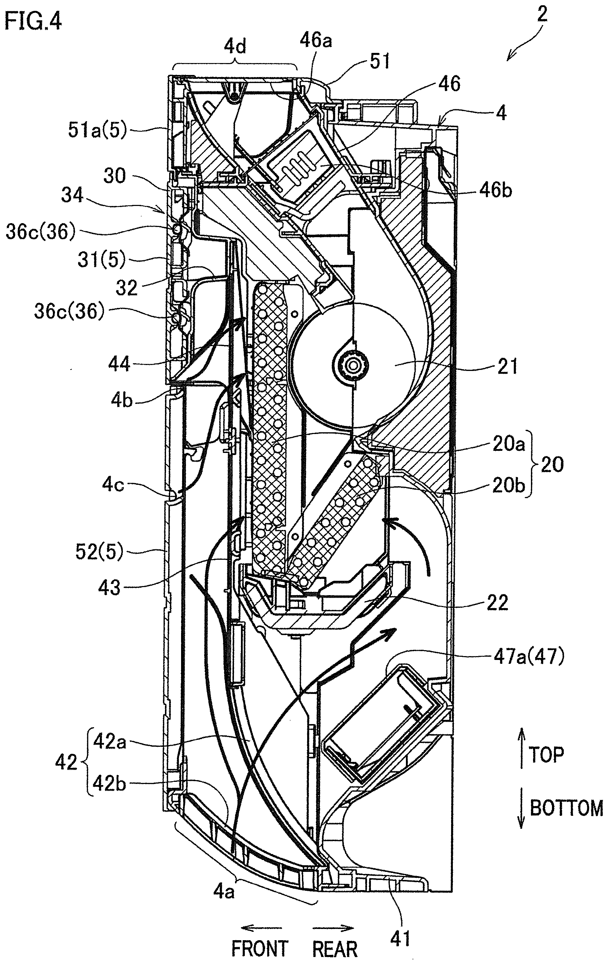

As illustrated in FIG. 4, the indoor unit 2 mainly includes a casing 4, internal devices, such as the indoor fan 21, the indoor heat exchanger 20, an outlet unit 46, and an electric component unit 47, which are accommodated in the casing 4, and a front grill 42. As described in detail later, the casing 4 includes a principal inlet 4a that is formed in a lower wall of the casing 4 and auxiliary inlets 4b and 4c that are formed in a front wall of the casing 4. An outlet 4d is formed in an upper wall of the casing 4. In the indoor unit 2, by driving the indoor fan 21, while the air near the floor surface is drawn through the principal inlet 4a, the air is also drawn through the auxiliary inlets 4b and 4c. The indoor heat exchanger 20 heats or cools the drawn air to perform conditioning. Then the post-conditioning air is blown from the outlet 4d and returned to the room.

The casing 4 includes a body frame 41, an outlet cover 51, the radiation panel 30, and an opening-closing panel 52. As described in detail later, the outlet cover 51 includes a front panel section 51a, and the radiation panel 30 includes a radiation plate 31. The front panel section 51a of the outlet cover 51, the radiation plate 31 of the radiation panel 30, and the opening-closing panel 52 are disposed so as to be flush with one another in a front surface of the casing 4, and the front panel section 51a, the radiation plate 31, and the opening-closing panel 52 constitute a front panel 5. As illustrated in FIG. 3, a power button 48 and an emission display section 49 that indicates an operation status are provided in an upper right end portion of the front panel 5, namely, a right end portion of the front panel section 51a of the outlet cover 51.

The body frame 41 is one that is attached to a wall surface, and the body frame 41 supports various internal devices described above. The front grill 42, the outlet cover 51, the radiation panel 30, and the opening-closing panel 52 are attached to the front surface of the body frame 41 while the body frame 41 supports the internal devices. The outlet cover 51 is attached to an upper end portion of the body frame 41, and the outlet 4d that is of a horizontally long rectangular opening is formed on the upper wall of the outlet cover 51.

The radiation panel 30 is attached below the outlet cover 51, and the opening-closing panel 52 is attached below the radiation panel 30. The principal inlet 4a that is the horizontally long opening is formed between a lower front end of the body frame 41 and a lower end of the opening-closing panel 52.

Each internal device accommodated in the casing 4 will be described below.

The indoor fan 21 is disposed slightly above a central portion in a height direction of the casing 4 such that an axial direction of the indoor fan 21 is aligned with the horizontal direction. The indoor fan 21 draws the air from the lower front and flows the air to the upper rear.

The indoor heat exchanger 20 is disposed in substantially parallel with the front panel 5. The indoor heat exchanger 20 includes a front heat exchanger 20a that is opposed to the rear surface of the front panel 5 and a rear heat exchanger 20b that is upwardly inclined toward the rear surface from a vicinity of the lower end portion of the front heat exchanger 20a. The front heat exchanger 20a is disposed in front of the indoor fan 21, and the rear heat exchanger 20b is disposed below the indoor fan 21. That is, the indoor heat exchanger 20 has a substantial V-shape as a whole. While opposing to the indoor fan 21, the indoor heat exchanger 20 is disposed so as to surround the front and lower portions of the indoor fan 21.

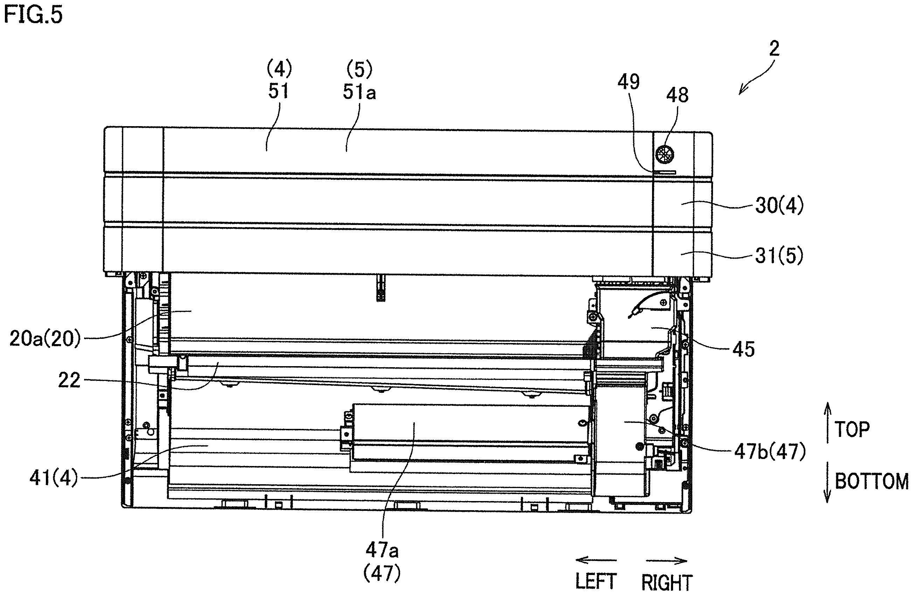

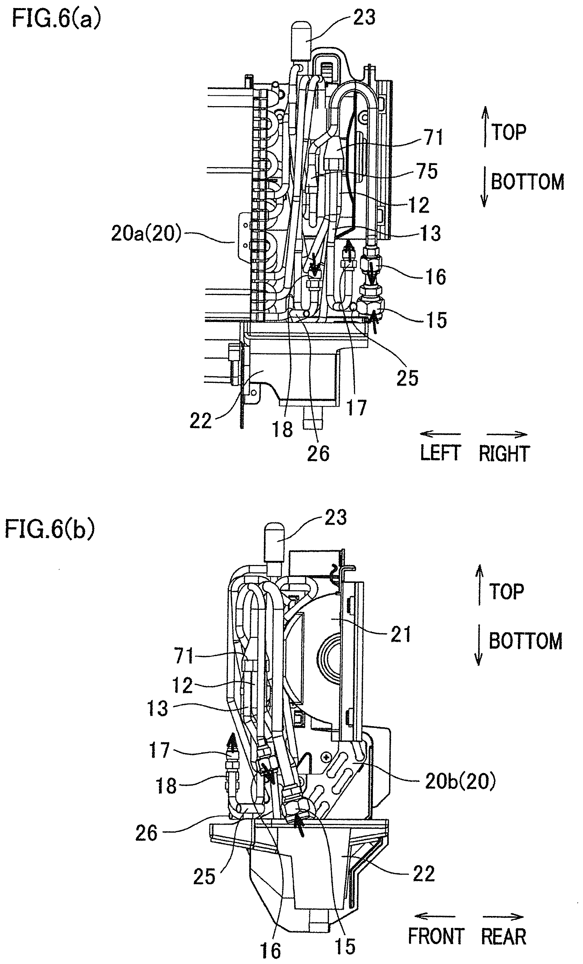

As illustrated in FIG. 6, when viewed from the front, pipe fittings are provided integral with the indoor heat exchanger 20 on the right side of the indoor heat exchanger 20 in order to supply the refrigerant sent from the outdoor unit 6 to the indoor heat exchanger 20 and radiation panel 30. As illustrated in FIG. 5, a drip-resistant cover 45 is attached in front of the pipe fittings.

As illustrated in FIG. 6(a), a first connection section 15 and a second connection section 16 are disposed in the right end portion of the indoor unit 2. During the heating operation, the first connection section 15 is connected to the pipe fitting that constitutes the channel on the downstream side of the compressor 60 in the principal channel 11, and the second connection section 16 is connected to the pipe fitting that constitutes the channel on the upstream side of the outdoor motor-operated valve 64 in the principal channel 11. A third connection section 17 and a fourth connection section 18 are disposed on the left sides of the first connection section 15 and second connection section 16. As described later, the third connection section 17 and the fourth connection section 18 are connected to both ends of the panel pipe fitting 36 (see FIG. 8 and the like) provided integral with the radiation panel 30, respectively.

The pipe fitting that extends from the first connection section 15 is connected to a branching pipe 71 that serves as the branching section 10a. The pipe fittings, which constitute the first channel 12 having the indoor heat exchanger 20 and the second channel 13 having the radiation panel 30, extend from the branching pipe 71. The indoor heat exchanger 20 of the embodiment is configured such that the refrigerant flows in the indoor heat exchanger 20 from the branching section 10a through the plurality of pipe fittings and the refrigerant flows in the merging section 10b from the indoor heat exchanger 20 through the plurality of pipe fittings. The first channel 12 is constructed by the plurality of pipe fittings that connect the branching section 10a and the merging section 10b to each other through the indoor heat exchanger 20. The pipe fitting, which extends from the branching pipe 71 and constitutes the second channel 13, is connected to the third connection section 17. The pipe fitting is curved into a substantial U-shape in the vicinity of the third connection section 17, and the panel incoming temperature sensor 25 is attached to the curved portion.

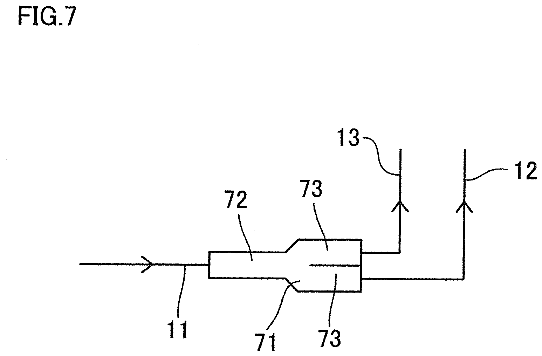

As illustrated in FIG. 7, the branching pipe 71 includes one principal pipe 72 and plurality of branch pipes 73 connected to one end of the principal pipe 72. The principal pipe 72 is connected to the pipe fitting that constitutes the channel on the downstream side of the compressor 60 in the principal channel 11 during the heating operation. One of the plurality of branch pipes 73 is connected to the pipe fitting constituting the second channel 13 in which the radiation panel 30 is provided. The remains of the plurality of branch pipes 73 are connected to the pipe fitting constituting the first channel 12 in which the indoor heat exchanger 20 is provided.

Referring back to FIG. 6, the pipe fitting that constitutes the second channel 13 extending from the fourth connection section 18 is connected to a merging pipe 75 that serves as the merging section 10b. The pipe fitting is curved into the substantial U-shape in the vicinity of the fourth connection section 18, and the panel outgoing temperature sensor 26 is attached to the curved portion. The indoor motor-operated valve 23 is interposed between the fourth connection section 18 and the merging pipe 75. The first channel 12 and the second channel 13 merge with each other in the merging section 10b. The pipe fitting from the merging pipe 75 is connected to the second connection section 16.

As indicated by an arrow in FIG. 6, during the operation in the radiation heating operation mode, the refrigerant sent from the outdoor unit 6 flows from the first connection section 15, and flows in the first channel 12 and second channel 13 through the branching pipe 71. The refrigerant, which flows in the second channel 13, flows in the panel pipe fitting 36 of the radiation panel 30 through the third connection section 17. The refrigerant, which flows out from the panel pipe fitting 36, flows from the fourth connection section 18, and flows out from the second connection section 16 through the indoor motor-operated valve 23 and merging pipe 75.

As illustrated in FIG. 5, a horizontally extending drain pan 22 is disposed below the indoor heat exchanger 20. When viewed from the front, the end portion on the left side of the drain pan 22 is located so as to be substantially opposed to the end portion of the indoor heat exchanger 20, and the end portion on the right side is located so as to be opposed to the pipe fitting disposed on the right side of the indoor heat exchanger 20. As illustrated in FIG. 4, the end portions in a front-back direction of the drain pan 22 are located so as to be substantially opposed to the end portions in a front-back direction of the indoor heat exchanger 20.

The outlet unit 46 is disposed above the indoor fan 21, and guides the air blown from the indoor fan 21 to the outlet 4d formed in the upper wall of the casing 4. The outlet unit 46 includes a horizontal fin 46a that is disposed near the outlet 4d and a vertical fin 46b that is disposed below the horizontal fin 46a. The horizontal fin 46a opens and closes the outlet 4d while changing a vertical direction of wind of the air blown from the outlet 4d. The vertical fin 46b changes a horizontal direction of the wind of the air blown from the outlet 4d.

As illustrated in FIG. 5, the electric component unit 47 is disposed below the drain pan 22, and includes an electric component box 47a in which a circuit board (not illustrated) and the like are accommodated and a terminal stage 47b that is electrically connected to the board accommodated in the electric component box 47a. The electric component box 47a is disposed in the position that is substantially opposed to a right half of the indoor heat exchanger 20, and the terminal stage 47b is disposed in the position that is opposed to the pipe fitting disposed on the right side of the indoor heat exchanger 20. A lead from the electric component unit 47 is routed straight up from the right side of the terminal stage 47b, and connected to the power button 48 and an LED luminous body of the emission display section 49, which are provided in the upper right end portion of the front panel 5.

As described above, the front grill 42 is attached to the body frame 41 so as to cover the body frame 41 to which such internal devices as the indoor heat exchanger 20, the indoor fan 21, the outlet unit 46, and the electric component unit 47 are attached. More specifically, the front grill 42 is attached to the body frame 41 so as to cover a range from the substantially central portion in the vertical direction of the front heat exchanger 20a to the lower end of the body frame 41. The front grill 42 includes a filter retaining section 42a and an inlet grill 42b disposed in the principal inlet 4a. A lower filter 43 and an upper filter 44 are vertically arrayed in the filter retaining section 42a.

The outlet cover 51 covers the outlet unit 46. As described above, the outlet 4d is formed in the upper wall of the outlet cover 51. The front panel section 51a is provided in the front surface of the outlet cover 51. The front panel section 51a has the horizontally long rectangular shape.

The radiation panel 30 has the horizontally long, substantially rectangular shape, and includes the radiation heat exchanger 34 as described in detail later.

The opening-closing panel 52 is detachably attached below the radiation plate 31 of the radiation panel 30. The opening-closing panel 52 has the horizontally long rectangular shape. As illustrated in FIG. 4, the vertical position at the upper end of the opening-closing panel 52 has the substantially same level as the upper end of the front grill 42. As described above, the lower end of the opening-closing panel 52 constitutes the part of the principal inlet 4a. Accordingly, the front grill 42 is exposed by detaching the opening-closing panel 52, so that the lower filter 43 and upper filter 44, which are attached to the filter retaining section 42a of the front grill 42, can be detached.

As described above, the front panel 5 includes the front panel section 51a that is provided in the outlet cover 51, the radiation plate 31 that is provided in the radiation panel 30, and the opening-closing panel 52. The auxiliary inlet 4b that is of the slit-like opening extending in the horizontal direction is formed between the radiation plate 31 of the radiation panel 30 and the opening-closing panel 52. The auxiliary inlet 4c that is of the slit-like opening extending in the horizontal direction is formed near the upper end of the opening-closing panel 52. The auxiliary inlets 4b and 4c are opposed to the front heat exchanger 20a.

### <Configuration of Radiation Panel 30 >

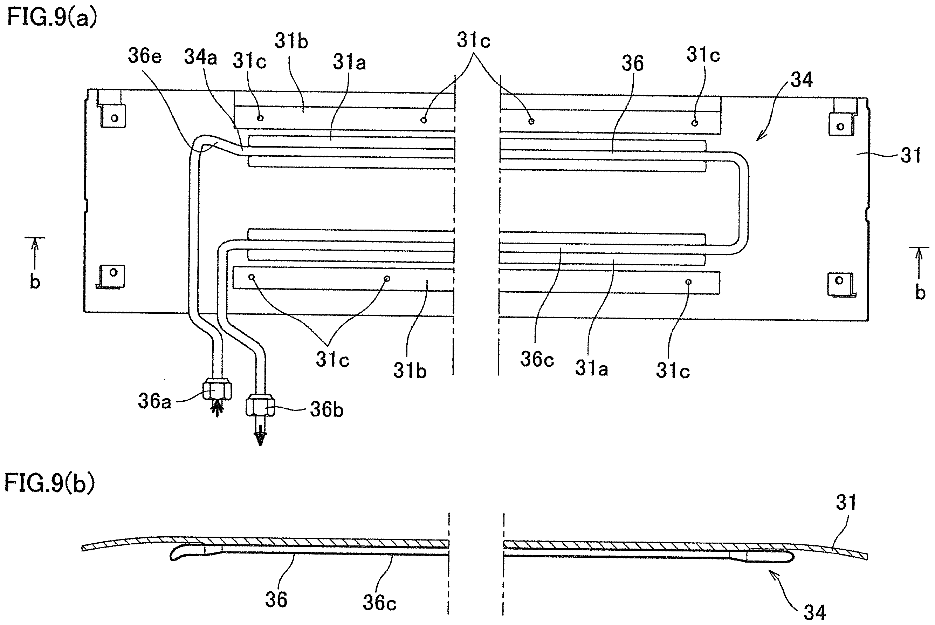

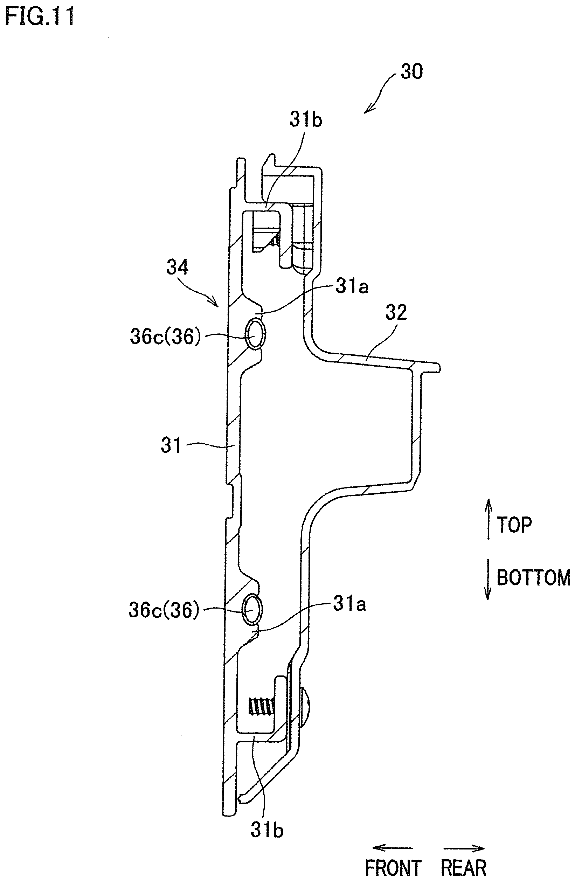

As illustrated in FIGs. 8 and 11, the radiation panel 30 mainly includes an aluminum radiation plate 31 and a resin heat-insulating cover 32 attached to the rear surface of the radiation plate 31. As illustrated in FIG. 9, the panel pipe fitting 36 that is of the part of the pipe fitting constituting the refrigerant circuit 10 is attached to the rear surface of the radiation plate 31.

As illustrated in FIG. 8(a), when viewed from the front, both end portions of the panel pipe fitting 36 are located below the right end portion of the radiation plate 31. As described above, the connection sections 36a and 36b are provided at both ends of the panel pipe fitting 36, and connected respectively to the third connection section 17 and fourth connection section 18 of the pipe fitting disposed on the right side of the indoor heat exchanger 20. The refrigerant sent from the outdoor unit 6 flows in the panel pipe fitting 36 through the connection section 36a, and flows out from the connection section 36b to the outside of the panel pipe fitting 36.

As indicated by the broken line in FIG. 8(a), a substantial U-shape radiation pipe fitting 36c opened onto the right side is provided in a portion opposed to the rear surface of the radiation plate 31 in the panel pipe fitting 36. More particularly, the radiation pipe fitting 36c two horizontally extending linear portions which are arranged in the vertical direction, and the left end portions of the two linear portions are connected to form the substantial U-shape. That is, the linear portion located on the upper side of the radiation pipe fitting 36c constitutes an uppermost portion of the radiation pipe fitting 36c. Out of the two linear portions, the right end portion of the linear portion located on the upper side is connected to the connection section 36a, and the right end portion of the linear portion located on the lower side is connected to the connection section 36b. Therefore, when viewed from the front, the refrigerant, which flows in the panel pipe fitting 36 through the connection section 36a, flows from the right side toward the left side in the linear portion located on the upper side of the radiation pipe fitting 36c, then, flows from the left side toward the right side in the linear portion located on the lower side, and flows out from the connection section 36b.

As illustrated in FIGs. 9(a) and 11, two horizontally extending projections 31a are formed and arranged in the vertical direction, in the rear surface of the radiation plate 31. The linear portions of the radiation pipe fitting 36c in the panel pipe fitting 36 described above is buried in the projections 31a, and fixed to the radiation plate 31. More particularly, in each of the linear portions of the radiation pipe fitting 36c, at least a half surface is covered with the projection 31a and the portion being opposite side to the radiation plate 31 is exposed. Thus, most of the surface of the radiation pipe fitting 36c is substantially covered with the projection 31a formed in the radiation plate 31, so that the heat of the refrigerant flowing in the panel pipe fitting 36 can efficiently be transferred to the radiation plate 31. As illustrated in FIG. 9(b), in the panel pipe fitting 36, the linear portions of the radiation pipe fitting 36c are in contact with the rear surface of the radiation plate 31, and the portion except the linear portions of the radiation pipe fitting 36c is separated from the rear surface of the radiation plate 31.

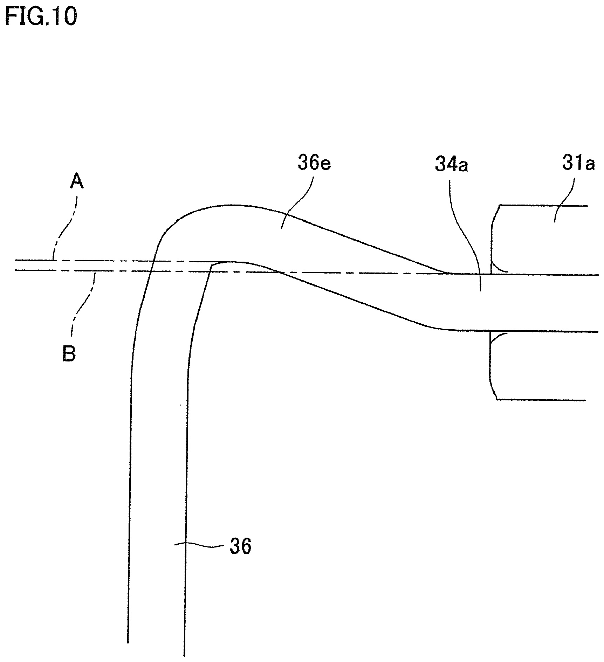

In the radiation panel 30, the portion constructed by the whole radiation plate 31 and radiation pipe fitting 36c constitutes the radiation heat exchanger 34. A trap section 36e is provided near an entrance section 34a (that is, during the heating operation, the end portion on the most upstream side of the radiation pipe fitting 36c constituting the radiation heat exchanger 34, and the right end of the linear portion, which is located on the upper side of the radiation pipe fitting 36c when viewed from the front) of the radiation heat exchanger 34 in the panel pipe fitting 36. The trap section 36e is bent from the entrance section 34a so as to be convex upward. As illustrated in FIG. 10, the lower end position (the position indicated by a sign A in the drawing) of the pipe fitting constituting an apex of the convexly-bent trap section 36e is located above the upper end position (the position indicated by a sign B in the drawing) of the pipe fitting constituting the entrance section 34a. That is, the trap section 36e is located above the entrance section 34a located in the uppermost portion of the radiation pipe fitting 36c. As illustrated in FIGs. 8(a) and 9, in the panel pipe fitting 36, the pipe fitting on the opposite side to the radiation heat exchanger 34 of the trap section 36e extends vertically.

As described above, with the trap section 36e, the liquid refrigerant accumulated on the upstream side of the closed indoor motor-operated valve 23 in the second channel 13 does not flow back to the upstream side of the trap section 36e during the operation in the warm-air heating operation mode. That is, the liquid refrigerant accumulates in the pipe fitting between the trap section 36e provided near the entrance section 34a of the radiation heat exchanger 34 in the radiation panel 30 and the indoor motor-operated valve 23 disposed on the downstream side of the radiation panel 30, but the liquid refrigerant does not flow out from the pipe fitting. That is, the trap section 36e corresponds to the back-flow preventing means of the present invention.

As illustrated in FIGs. 9 and 11, a fixation section 31b is formed above the projection 31a located in the upper portion of the rear surface of the radiation plate 31, and the fixation section 31b is also formed below the projection 31a located in the lower portion of the rear surface of the radiation plate 31 for screwing the heat-insulating cover 32 to the rear surface of the radiation plate 31. The fixation section 31b extends along the horizontal direction, projecting from the rear surface of the radiation plate 31, and a leading end of the fixation section 31b is bent toward the projection 31a. The bent portion is substantially parallel to the rear surface of the radiation plate 31, and a plurality of screw holes 31c are formed in the fixation section 31b in order to screw the heat-insulating cover 32.

The heat-insulating cover 32 is attached to the fixation sections 31b of the radiation plate 31 by the screws. As illustrated in FIGs. 8(c) and 11, the radiation pipe fitting 36c of the panel pipe fitting 36 is disposed in a space formed between the rear surface of the radiation plate 31 and the front surface of the heat-insulating cover 32. A heat-insulating effect caused by the air in the space can suppress the transfer of the heat from the radiation pipe fitting 36c constituting the radiation heat exchanger 34 to a space outside the heat-insulating cover 32.

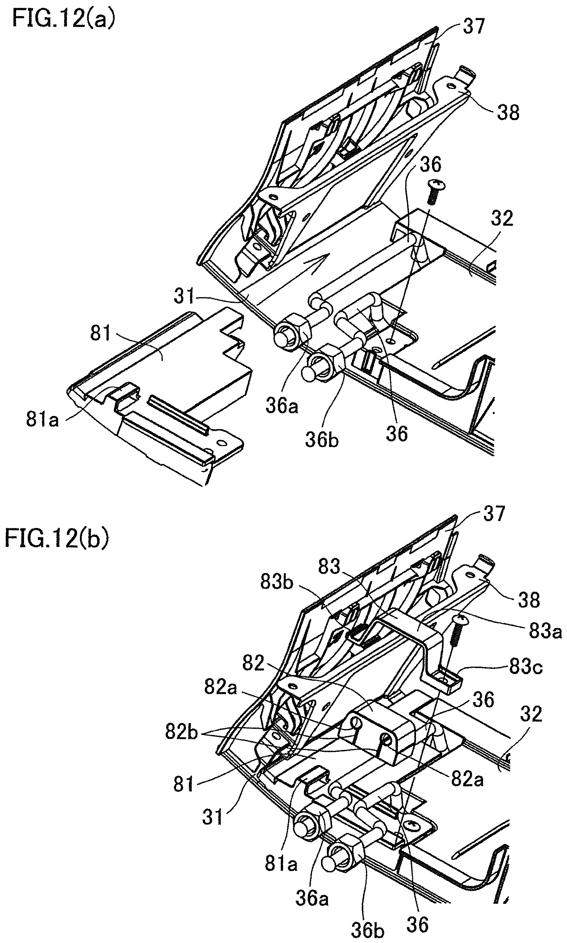

As illustrated in FIG. 8(c), the heat-insulating cover 32 does not cover the pipe fitting between both ends of the radiation pipe fitting 36c and the connection sections 36a and 36b in the panel pipe fitting 36. As illustrated in FIGs. 12(a) and 12(b), a support member 81 is fitted in between the pipe fitting located outside the heat-insulating cover 32 and the radiation plate 31. The support member 81 is screwed to the heat-insulating cover 32. A rubber bush 82 is fitted in the two pipe fittings, which are located outside the heat-insulating cover 32 and respectively connected to the connection sections 36a and 36b. As illustrated in FIG. 12(b), two through-holes 82a and two slits 82b are provided in the rubber bush 82. The two pipe fittings are fitted in the through-holes 82a, respectively, and each of the slits 82b reaches each of the through-holes 82a from the surface of the rubber bush 82. The rubber bush 82 is fixed to the radiation plate 31 by a fixture 83 while the two pipe fittings are fitted in the through-holes 82a respectively through the slits 82b.

The fixture 83 has the substantial U-shape, and includes a pressing section 83a that covers the rear surface and both side surfaces of the rubber bush 82 and fixation sections 83b and 83c that are provided on the right and left sides of the pressing section 83a. In FIG. 12(b), the fixation section 83b provided on the left end side of the pressing section 83a is hooked by a pawl 81a provided in the support member 81. On the other hand, the fixation section 83c provided on the right end side of the pressing section 83a is screwed to the heat-insulating cover 32. Thereby, the two pipe fittings connected to the connection sections 36a and 36b respectively are fixed to the radiation plate 31.

As illustrated in FIG. 8, to each of the end portions in the horizontal direction of the rear surface of the radiation plate 31, a side panel 37 constituting the side surface of the casing 4 and an attaching member 38 used to attach the radiation panel 30 to the body frame 41 are attached in turn from the end part.

### <Features of Air Conditioner 1 of the Embodiment>

The air conditioner 1 of the embodiment includes the trap section 36e that prevents the outflow of the liquid refrigerant in the radiation heat exchanger 34 during the operation in the warm-air heating operation mode. Accordingly, the problem that the temperature (the surface temperature at the radiation heat exchanger 34) at the radiation plate 31 is not lowered can be solved because the high-temperature refrigerant does not flow in the radiation heat exchanger 34.

In the air conditioner 1 of the embodiment, the trap section 36e is disposed above the entrance section 34a of the radiation heat exchanger 34. Accordingly, the outflow of the liquid refrigerant in the radiation heat exchanger 34 can be prevented by the simple configuration with no use of other members such as a valve structure.

In the air conditioner 1 of the embodiment, the trap section 36e is bent from the entrance section 34a of the radiation heat exchanger 34 so as to be convex upward. Accordingly, the pipe fitting is bent from the entrance section 34a of the radiation heat exchanger 34 so as to be convex upward, which allows the pipe fitting in the vicinity of the entrance section 34a of the radiation heat exchanger 34 to be partially disposed above the entrance section 34a of the radiation heat exchanger 34.

In addition, in the air conditioner 1 of the embodiment, the entrance section 34a of the radiation heat exchanger 34 is located in the uppermost portion of the radiation pipe fitting 36c. Accordingly, the outflow of the liquid refrigerant can surely be prevented because the trap section 36e is located above the uppermost portion of the radiation pipe fitting 36c.

The embodiment of the present invention is described above with reference to the drawings. However, it should be understood that the specific configuration is not limited to the embodiment. It is noted that the scope of the present invention is determined by not the description of the embodiment but claims of the present invention, and that all meanings equivalent to the claims and all modifications within the scope are included in the present invention.

The above described embodiment deals with a case in which the refrigerant circuit 10 that connects the indoor unit 2 and the outdoor unit 6 to each other includes the second channel 13 that is connected in parallel with the first channel 12 in which the indoor heat exchanger 20 is provided, and the radiation panel 30 is provided in the second channel 13. Alternatively, the indoor heat exchanger 20 and the radiation panel 30 may be connected in series with each other.

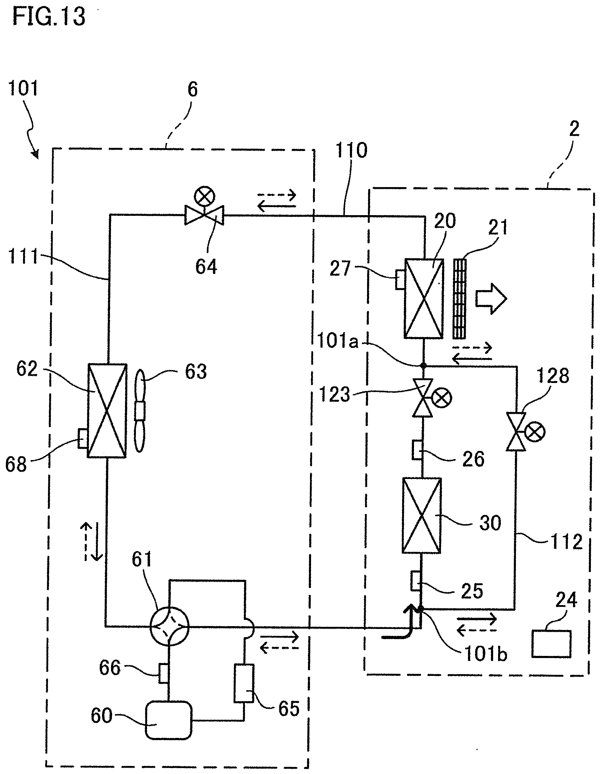

As illustrated in FIG. 13, a refrigerant circuit 110 of an air conditioner 101 according to a first modification of the embodiment includes a circular principal channel 111 in which the outdoor motor-operated valve 64, the outdoor heat exchanger 62, the compressor 60, the radiation panel 30, and the indoor heat exchanger 20 are sequentially connected. The discharge-side pipe fitting and intake-side pipe fitting of the compressor 60 are connected to the four-way valve 61. Branching sections 101a and 101b are respectively provided on both sides of the radiation panel 30, and both ends of a branching channel 112 are connected to the branching sections 101a and 101b. The branching section 101a is located between the indoor heat exchanger 20 and the radiation panel 30, and the branching section 101b is located on the opposite side to the branching section 101a with respect to the radiation panel 30. A first indoor motor-operated valve 128 is provided in the branching channel 112.

A second indoor motor-operated valve 123 is provided between the radiation panel 30 and the branching section 101a. The panel incoming temperature sensor 25 is provided between the branching section 101b and the radiation heat exchanger 34 of the radiation panel 30, and the panel outgoing temperature sensor 26 is provided between the second indoor motor-operated valve 123 and the radiation heat exchanger 34 of the radiation panel 30.

In the first modification, like the embodiment described above, the trap section 36e is provided near the entrance section 34a of the radiation heat exchanger 34 in the radiation panel 30.

In the refrigerant circuit 110, during the operation in the cooling operation mode, the first indoor motor-operated valve 128 is opened while the second indoor motor-operated valve 123 is closed, and the four-way valve 61 is switched to the state indicated by the broken line in FIG. 13. Therefore, as indicated by the broken-line arrow in FIG. 13, the high-temperature refrigerant discharged from the compressor 60 flows in the outdoor heat exchanger 62 through the four-way valve 61. The refrigerant condensed by the outdoor heat exchanger 62 flows in the indoor heat exchanger 20 after being decompressed by the outdoor motor-operated valve 64. The refrigerant vaporized by the indoor heat exchanger 20 flows in the compressor 60 through the branching channel 112, four-way valve 61, and accumulator 65.

During the operation in the radiation heating operation mode, the first indoor motor-operated valve 128 is closed while the second indoor motor-operated valve 123 is opened, and the four-way valve 61 is switched to the state indicated by the solid-line in FIG. 13. Therefore, as indicated by a thick-line arrow in FIG. 13, the high-temperature refrigerant discharged from the compressor 60 flows in the radiation panel 30 through the four-way valve 61, and then flows in the indoor heat exchanger 20. The refrigerant condensed by the radiation panel 30 and indoor heat exchanger 20 flows in the outdoor heat exchanger 62 after being decompressed by the outdoor motor-operated valve 64. The refrigerant vaporized by the outdoor heat exchanger 62 flows in the compressor 60 through the four-way valve 61 and accumulator 65.

During the operation in the warm-air heating operation mode, the first indoor motor-operated valve 128 is opened while the second indoor motor-operated valve 123 is closed, and the four-way valve 61 is switched to the state indicated by the solid-line in FIG. 13. Therefore, as indicated by the solid-line arrow in FIG. 13, the high-temperature refrigerant discharged from the compressor 60 flows in the indoor heat exchanger 20 through the four-way valve 61 and branching channel 112. The refrigerant condensed by the indoor heat exchanger 20 flows in the outdoor heat exchanger 62 after being decompressed by the outdoor motor-operated valve 64. The refrigerant vaporized by the outdoor heat exchanger 62 flows in the compressor 60 through the four-way valve 61 and accumulator 65. With the second indoor motor-operated valve 123 being closed, the refrigerant discharged from the compressor 60 does not flow to the side of the branching section 101a beyond the second indoor motor-operated valve 123. That is, the refrigerant accumulates in the pipe fitting between the trap section 36e and the second indoor motor-operated valve 123.

In the air conditioner 101 of the first modification, like the embodiment described above, the trap section 36e can prevent the outflow of the liquid refrigerant in the radiation heat exchanger 34.

The embodiment described above deals with a case in which the principal pipe 72 of the branching pipe 71 that serves as the branching section 10a of the refrigerant circuit 10 is connected to the pipe fitting constituting the channel on the downstream side of the compressor 60 in the principal channel 11 during the heating operation, and the plurality of branch pipes 73 of the branching pipe 71 are connected to the pipe fitting constituting the first channel 12 in which the indoor heat exchanger 20 is provided and the pipe fitting constituting the second channel 13 in which the radiation panel 30 is provided, respectively. However, the present invention is not limited to the embodiment.

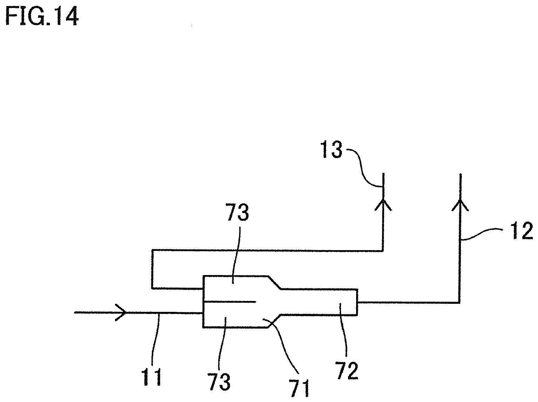

For example, in an air conditioner according to the second modification of the embodiment, as illustrated in FIG. 14, the principal pipe 72 of the branching pipe 71 is connected to the pipe fitting constituting the first channel 12 in which the indoor heat exchanger 20 is provided, and the plurality of branch pipes 73 of the branching pipe 71 are connected to the pipe fitting constituting the channel on the downstream side of the compressor 60 in the principal channel 11 during the heating operation and the pipe fitting constituting the second channel 13 in which the radiation panel 30 is provided, respectively. The disposition of the branching pipe 71 in the second modification can suppress the back-flow of the refrigerant in the second channel 13 into the pipe fitting constituting the principal channel 11 connected to the compressor 60.

The embodiment described above deals with a case in which the trap section 36e provided adjacent to the entrance section 34a of the radiation heat exchanger 34 prevents the outflow of the liquid refrigerant in the radiation heat exchanger 34. However, the outflow preventing means for preventing the outflow of the liquid refrigerant is not limited to the embodiment. For example, a valve structure that can close the second channel 13 may be provided near the entrance section 34a of the radiation heat exchanger 34.

In addition, the embodiment described above deals with a case in which the entrance section 34a of the radiation heat exchanger 34 is located in the uppermost portion of the radiation pipe fitting 36c. However, the entrance section 34a of the radiation heat exchanger 34 may not be located in the uppermost portion of the radiation pipe fitting 36c.

The embodiment described above deals with a case in which the radiation pipe fitting 36c constituting the radiation heat exchanger 34 includes the two linear portions fixed to the radiation plate 31 and the pipe fitting between the two linear portions. However, the present invention is not limited to the radiation pipe fitting 36c of the embodiment. That is, the whole of the radiation pipe fitting 36c may be fixed to the radiation plate 31. In the case that the radiation pipe fitting 36c includes plurality of portions fixed to the radiation plate 31, the radiation pipe fitting 36c includes the plurality of portions fixed to the radiation plate 31 and the pipe fitting connecting the plurality of portions. That is, both the end portions of the radiation pipe fitting 36c are always fixed to the radiation plate 31.

### Industrial Applicability

The use of the present invention can solve the problem that the surface temperature at the radiation heat exchanger does not drop.

### Reference Signs List

- 1: Air Conditioner
- 2: Indoor Unit
- 10: Refrigerant Circuit
- 10a: Branching Section
- 10b: Merging Section
- 11: Principal Channel
- 12: First Channel
- 13: Second Channel
- 20: Indoor Heat Exchanger
- 21: Indoor Fan
- 31: Radiation Plate
- 34: Radiation Heat Exchanger
- 34a: Entrance Section
- 36c: Radiation Pipe Fitting
- 36e: Trap Section (Outflow Preventing Means)
- 60: Compressor
- 62: Outdoor Heat Exchanger
- 64: Outdoor Motor-Operated Valve (Decompression Structure)

## Claims

1. An air conditioner (1) comprising a refrigerant circuit (10) having a compressor (60), an indoor heat exchanger (20), a radiation heat exchanger (34), a decompression structure (64), and an outdoor heat exchanger (62), wherein
the indoor heat exchanger (20) is provided in an indoor unit (2) so as to face a fan (21);
the radiation heat exchanger (34) is provided to a surface of the indoor unit (2);
the refrigerant circuit (10) is configured to enable a radiation heating operation mode in which radiation heating and warm-air heating are performed by causing a high-temperature refrigerant to flow in the radiation heat exchanger (34) and the indoor heat exchanger (20), and a warm-air heating operation mode in which warm-air heating is performed by causing the high-temperature refrigerant to flow not in the radiation heat exchanger (34), but in the indoor heat exchanger (20); and
there is provided an outflow preventing means (36e) which, during the warm-air heating operation mode, prevents outflow of a liquid refrigerant in the radiation heat exchanger (34); **characterized in that**
the outflow preventing means (36e) is structured by arranging, above an entrance section (34a) of the radiation heat exchanger (34), a part of a pipe fitting in the vicinity of an entrance of the radiation heat exchanger (34); wherein the outflow preventing means (36e) is structured by a pipe fitting which is bent to form a convex upward from the entrance section (34a) of the radiation heat exchanger (34);
wherein the lower end position (A) of the pipe fitting constituting an apex of the convexly-bent outflow preventing means (36e) is located above the upper end position (B) of the pipe fitting constituting the entrance section (34a).

2. The air conditioner (1) according to claim 1, wherein the radiation heat exchanger (34) includes:
a radiation plate (31) provided to a surface of the indoor unit (2); and
a radiation pipe fitting (36c) fixed to the radiation plate (31), and
the entrance section (34a) of the radiation heat exchanger (34) is located in an uppermost part of the radiation pipe fitting (36c).

3. The air conditioner (1) according to claim 1 or 2, wherein the refrigerant circuit (10) includes:
a principal channel (11) sequentially having the decompression structure (64), the outdoor heat exchanger (62), and the compressor (60);
a first channel (12) provided with the indoor heat exchanger (20), which connects a branching section (10a) provided to the downstream side of the compressor (60) in the principal channel (11) with a merging section (10b) provided to the upstream side of the decompression structure (64) during the heating operation; and
a second channel (13) provided with the radiation heat exchanger (34), which connects the branching section (10a) with the merging section (10b) in parallel with the first channel (12).

## Patentansprüche

1. Klimaanlage (1), umfassend einen Kältemittelkreislauf (10), der einen Kompressor (60), einen Innenraum-Wärmetauscher (20), einen Strahlungswärmetauscher (34), eine Dekompressionsstruktur (64) und einen Außenwärmetauscher (62) aufweist, wobei
der Innenraum-Wärmetauscher (20) in einer Innenraumeinheit (2) bereitgestellt ist, um einem Gebläse (21) zugewandt zu sein;
der Strahlungswärmetauscher (34) einer Oberfläche der Innenraumeinheit (2) bereitgestellt ist;
der Kältemittelkreislauf (10) konfiguriert ist, um einen Strahlungsheizbetriebsmodus, in dem Strahlungsheizung und Warmluftheizung durchgeführt werden, indem bewirkt wird, dass ein Hochtemperaturkältemittel in den Strahlungswärmetauscher (34) und den Innenraum-Wärmetauscher (20) strömt, und einen Warmluftheizbetriebsmodus zu ermöglichen, in dem die Warmluftheizung durchgeführt wird, indem bewirkt wird, dass das Hochtemperaturkältemittel nicht in den Strahlungswärmetauscher (34) strömt, sondern in den Innenraum-Wärmetauscher (20); und
eine Ausströmungsschutzeinrichtung (36e) bereitgestellt ist, die, während des Warmluftheizbetriebsmodus, ein Ausströmen eines flüssigen Kältemittels in den Strahlungswärmetauscher (34) verhindert;
**dadurch gekennzeichnet, dass** die Ausströmungsschutzeinrichtung (36e) durch Anordnen, über einem Eingangsabschnitt (34a) des Strahlungswärmetauschers (34), eines Teils eines Rohrverbindungsstücks in der Nähe eines Eingangs des Strahlungswärmetauschers (34) aufgebaut ist; wobei die Ausströmungsschutzeinrichtung (36e) durch ein Rohrverbindungsstück aufgebaut ist, das gebogen wird, um vom Eingangsabschnitt (34a) des Strahlungswärmetauschers (34) ein nach oben gerichtetes Konvex zu bilden;
wobei die untere Endposition (A) des Rohrverbindungsstücks, die einen Scheitelpunkt der konvex gebogenen Ausströmungsschutzeinrichtung (36e) darstellt, über der oberen Endposition (B) des Rohrverbindungsstücks gelegen ist, das den Eingangsabschnitt (34a) darstellt.

2. Klimaanlage (1) nach Anspruch 1, wobei der Strahlungswärmetauscher (34) einschließt:
eine Strahlungsplatte (31), die einer Oberfläche der Innenraumeinheit (2) bereitgestellt ist; und
ein Strahlungsrohrverbindungsstück (36c), das an der Strahlungsplatte (31) befestigt ist, und
den Eingangsabschnitt (34a) des Strahlungswärmetauschers (34), der in einem obersten Teil des Strahlungsrohrverbindungsstücks (36c) gelegen ist.

3. Klimaanlage (1) nach Anspruch 1 oder 2, wobei der Kältemittelkreislauf (10) einschließt:
einen Hauptkanal (11), der in Abfolge die Dekompressionsstruktur (64), den Außenwärmetauscher (62) und den Kompressor (60) aufweist;
einen ersten Kanal (12), der mit dem Innenraum-Wärmetauscher (20) bereitgestellt ist, der einen Abzweigungsabschnitt (10a), der der stromabwärtigen Seite des Kompressors (60) in dem Hauptkanal (11) bereitgestellt ist, mit einem Zusammenführungsabschnitt (10b), der der stromaufwärtigen Seite der Dekompressionsstruktur (64) bereitgestellt ist, während des Heizbetriebs verbindet; und
einen zweiten Kanal (13), der mit dem Strahlungswärmetauscher (34) bereitgestellt ist, der den Abzweigungsabschnitt (10a) mit dem Zusammenführungsabschnitt (10b) parallel zum ersten Kanal (12) verbindet.

## Revendications

1. Climatiseur (1) comprenant un circuit de réfrigérant (10) présentant un compresseur (60), un échangeur de chaleur intérieur (20), un échangeur de chaleur par rayonnement (34), une structure de décompression (64) et un échangeur de chaleur extérieur (62), dans lequel
l'échangeur de chaleur intérieur (20) est pourvu dans une unité intérieure (2) de sorte à faire face à un ventilateur (21) ;
l'échangeur de chaleur par rayonnement (34) est pourvu sur une surface de l'unité intérieure (2) ;
le circuit de réfrigérant (10) est configuré pour permettre un mode d'opération de chauffage par rayonnement dans lequel le chauffage par rayonnement et le chauffage à air chaud sont réalisés en amenant un réfrigérant à haute température à s'écouler dans l'échangeur de chaleur par rayonnement (34) et l'échangeur de chaleur intérieur (20), et un mode d'opération de chauffage à air chaud dans lequel le chauffage à air chaud est réalisé en amenant le réfrigérant à haute température à ne pas s'écouler dans l'échangeur de chaleur par rayonnement (34) mais dans l'échangeur de chaleur intérieur (20) ; et
un moyen d'empêchement d'écoulement (36e) qui, pendant le mode d'opération de chauffage à air chaud, empêche l'écoulement d'un réfrigérant liquide dans l'échangeur de chaleur par rayonnement (34) est pourvu ;
**caractérisé en ce que**
le moyen d'empêchement d'écoulement (36e) est structuré par agencement, au-dessus d'une section d'entrée (34a) de l'échangeur de chaleur par rayonnement (34), d'une partie d'un raccord de tuyau à proximité d'une entrée de l'échangeur de chaleur par rayonnement (34) ; dans lequel le moyen d'empêchement d'écoulement (36e) est structuré par un raccord de tuyau qui est plié pour former un convexe vers le haut depuis la section d'entrée (34a) de l'échangeur de chaleur par rayonnement (34) ;
dans lequel la position d'extrémité inférieure (A) du raccord de tuyau constituant un sommet du moyen d'empêchement d'écoulement plié de manière convexe (36e) est située au-dessus de la position d'extrémité supérieure (B) du raccord de tuyau constituant la section d'entrée (34a).

2. Climatiseur (1) selon la revendication 1, dans lequel l'échangeur de chaleur par rayonnement (34) inclut :
une plaque de rayonnement (31) pourvue sur une surface de l'unité intérieure (2) ; et
un raccord de tuyau de rayonnement (36c) fixé à la plaque de rayonnement (31), et
la section d'entrée (34a) de l'échangeur de chaleur par rayonnement (34) est située dans une partie supérieure du raccord de tuyau de rayonnement (36c).

3. Climatiseur (1) selon la revendication 1 ou 2, dans lequel le circuit de réfrigérant (10) inclut :
un canal principal (11) présentant séquentiellement la structure de décompression (64), l'échangeur de chaleur extérieur (62), et le compresseur (60) ;
un premier canal (12) pourvu de l'échangeur de chaleur intérieur (20) qui raccorde une section de bifurcation (10a) pourvue sur le côté en aval du compresseur (60) dans le canal principal (11) avec une section de jonction (10b) prévue sur le côté amont de la structure de décompression (64) pendant l'opération de chauffage ; et
un second canal (13) pourvu de l'échangeur de chaleur par rayonnement (34) qui raccorde la section de bifurcation (10a) avec la section de jonction (10b) en parallèle du premier canal (12).
